Europäisches Patentamt

European Patent Office

Office européen des brevets

(11) Numéro de publication : **0 672 983 A1**

## (12) DEMANDE DE BREVET EUROPEEN

(21) Numéro de dépôt : 95400439.6

(51) Int. Cl.⁶ : **G06F 9/44**

(22) Date de dépôt : **01.03.95**

(30) Priorité : **10.03.94 FR 9402790**

(43) Date de publication de la demande :
**20.09.95 Bulletin 95/38**

(84) Etats contractants désignés :
**DE FR GB IT PT**

(71) Demandeur : **BULL S.A.**
**68, route de Versailles,**
**B.P. 45**
**F-78430 Louveciennes (FR)**

(72) Inventeur : **Dechamboux, Pascal**
**42, rue Thiers**
**F-38000 Grenoble (FR)**

(54) **Procédé de gestion de l'héritage multiple d'objets persistants et partagés.**

(57)    Ce procédé de gestion de l'héritage multiple est conçu pour être appliqué dans un système ou à un langage à objets persistants et partagés. Selon ce procédé, le format d'un objet est maintenu inchangé lors de son chargement de l'espace persistant vers l'espace virtuel. En outre, chaque classe engendrant un objet est associée à un identificateur de la classe constant dans toutes les applications utilisant la classe ainsi qu'à travers toutes les recompilations. La structure de l'objet est ainsi indépendante de l'adresse d'implantation en mémoire et du code de la classe générant cet objet. Enfin, selon le présent procédé, un chemin d'adressage permettant la gestion de l'héritage est imposé au travers de différentes tables.

EP 0 672 983 A1

EP 0 672 983 A1

La présente invention concerne un procédé de gestion de l'héritage multiple dans un système ou un langage à objets persistants et partagés.

De manière générale les langages ou les systèmes à objets s'appuient sur la notion de classe qui est une entité permettant de générer et de manipuler des objets. Une classe définit d'une part la structure des objets qu'elle va engendrer à travers la définition d'attributs et d'autre part le comportement desdits objets à travers la définition de méthodes. En outre, la possibilité de définir une relation d'héritage entre différentes classes est une caractéristique essentielle de ce type de langages, cette relation pouvant et étant généralement une relation d'héritage multiple. Il est parlé d'héritage multiple lorsqu'une même classe est définie par l'héritage de plusieurs autres classes. Pour mémoire, une classe qui hérite d'une autre classe est communément appelée une "sous-classe", la classe héritée étant alors considérée comme une "super-classe" de la sous-classe. Egalement, dans la relation d'héritage relativement à la notion de classe il est couramment distingué deux composantes. Une première composante relative à l'héritage structurel : la structure d'un objet d'une classe donnée se compose des attributs définis dans cette classe ainsi que de l'ensemble des attributs des classes héritées directement ou indirectement. La seconde composante est relative à l'héritage comportemental les méthodes permettant de manipuler un objet sont celles définies dans sa classe ainsi que toutes celles définies dans les classes héritées directement ou indirectement. A cet aspect s'ajoute généralement la possibilité de surcharger pour une sous-classe, le code d'une méthode définie dans une super-classe. Cette fonction nécessite alors un mécanisme de liaison dynamique à l'exécution appelé par l'homme du métier "late binding".

Lorsqu'un tel langage à objets (par exemple C++) est compilé, le compilateur doit définir l'implantation mémoire des objets ainsi que l'adressage des attributs et des méthodes associés. La gestion de l'héritage multiple d'objets devient assez rapidement complexe et pose des problèmes, mais dans un contexte d'objets non persistants il existe une technique efficace, mise en oeuvre avec le langage C++, qui permet de résoudre des problèmes posés par l'héritage multiple. Cette technique est décrite par M.A. Ellis et B. Stroustrup dans "The Annotated C++ Reference Manual", Addison-Wesley 1990.

Malheureusement cette technique présente un inconvénient majeur car elle devient inefficace et donc inutilisable lorsqu'il est désiré l'appliquer dans un contexte d'objets persistants (les objets survivant à la fin de l'exécution du programme qui les a créés) et partagés (plusieurs programmes accédant simultanément un même objet).

La présente invention a pour but de remédier aux inconvénients précités et propose un procédé de gestion de l'héritage multiple qui peut être utilisé aisément et efficacement dans un système ou par le générateur de code d'un langage à objets persistants et partagés.

Pour cela, le procédé de gestion de l'héritage multiple mentionné dans le préambule est remarquable en ce que le format d'un objet est maintenu inchangé lors du chargement dudit objet de l'espace persistant vers l'espace virtuel, chaque classe engendrant un objet étant associée à un identificateur de la classe constant dans toutes les applications utilisant la classe ainsi qu'à travers toutes les recompilations, la structure de l'objet étant ainsi indépendante de l'adresse d'implantation en mémoire et du code de la classe générant cet objet, alors qu'un chemin d'adressage permettant la gestion de l'héritage est emprunté au travers de différentes tables.

En outre, le procédé de gestion de l'héritage multiple selon le présente invention est remarquable en ce que, pour l'implantation des objets en mémoire, chaque classe est associée à une partie qui est identique pour tous les objets appartenant à cette classe, chaque partie étant composée de deux sous-parties, une première sous-partie comportant un identificateur de la classe réelle qui a engendré l'objet, identificateur utilisé comme indice dans une table de classes donnant le point d'entrée du chemin permettant la gestion de l'héritage et une seconde sous-partie renfermant l'état défini par la classe ayant engendré l'objet, l'ensemble des attributs définis par ladite classe étant regroupé dans ledit état.

Ainsi, selon l'idée de l'invention la plus grande partie du traitement est opérée statiquement, c'est-à-dire au moment de la compilation et le chemin d'adressage est élaboré pour autoriser avec certitude l'appel de la méthode adéquate au moment de l'exécution, cette technique garantit que cette méthode peut être appliquée de nouveau sans opération préalable sur l'objet qui est en train d'être chargé. La structure de l'objet est indépendante de son implantation mémoire, donc de l'adresse à laquelle il va être implanté et indépendante du code de la classe qui a engendré cet objet.

La description suivante en regard des dessins annexés, le tout donné à titre d'exemple non limitatif, fera bien comprendre comment l'invention peut être réalisée.

La figure 1 présente, pour un exemple d'héritage multiple donné, une solution de l'art antérieur pour des objets non persistants et non partagés.

La figure 2 propose, pour le même exemple d'héritage multiple, la solution selon l'invention applicable à des objets persistants et partagés.

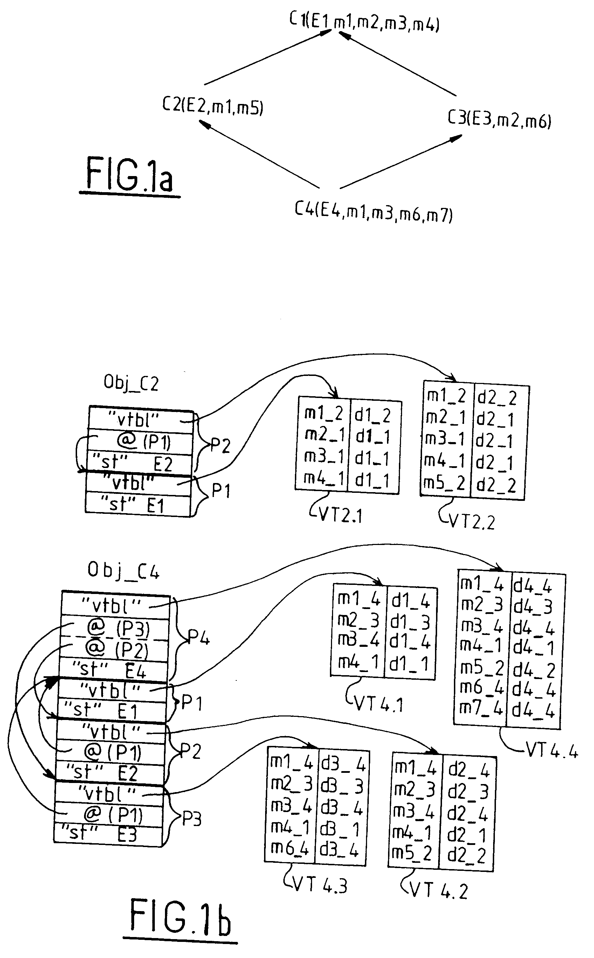

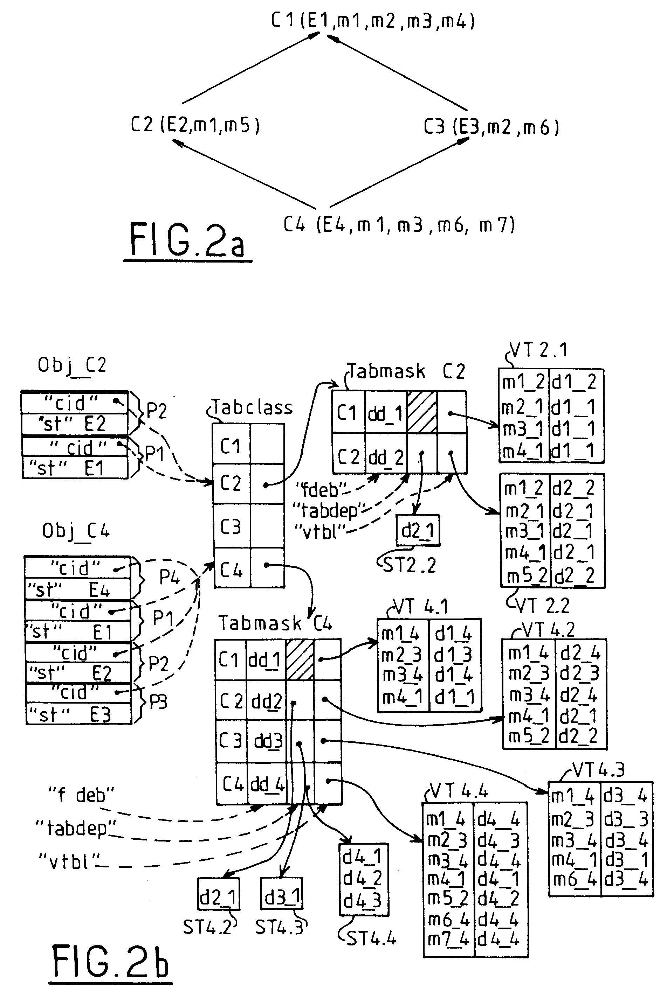

A partir de l'exemple d'héritage multiple présenté sur les figures 1 et 2 et pour une meilleure appréhension

2

de l'idée de l'invention, vont être tout d'abord décrits quelques problèmes liés à la gestion de l'héritage multiple. En particulier, il ressort de cet avant-propos, qu'il n'est pas possible de définir une implantation mémoire pour les objets concernés, qui permette de déterminer statiquement, c'est-à-dire au moment de la compilation, l'adressage des attributs d'un objet. La même constatation résulte de l'examen de l'appel des méthodes surchargées.

Avec l'exemple simple choisi et représenté sur les figures 1.a et 2.a, quatre classes C1, C2, C3 et C4 sont décrites. Les classes C2 et C3 sont en relation d'héritage direct avec la classe C1. La classe C4 est en relation d'héritage multiple direct avec les classes C2 et C3 et indirecte avec la classe C1 par l'intermédiaire des classes C2 et C3. Chaque classe Ci définit ses propres attributs qui sont regroupés dans un état Ei. Ainsi, sur les figures 1.a et 2.a les attributs des classes C1, C2, C3 et C4 sont réunis respectivement dans les états E1, E2, E3 et E4. Les méthodes mi proposées pour chaque classe dans l'exemple sont les méthodes implantées par la classe, ainsi en est-il dans l'exemple des méthodes m1, m2, m3 et m4 implantées par la classe C1, des méthodes m1 et m5 implantées par la classe C2, des méthodes m2 et m6 implantées par la classe C3 et enfin des méthodes m1, m3, m6 et m7 implantées par la classe C4.

Le premier problème rencontré est relatif à l'adressage de l'état Ei. En effet, l'implantation mémoire d'un objet correspond à une zone mémoire dans laquelle se trouvent tous les attributs composant l'objet. Cette zone contient donc tous les états Ei des classes auxquelles appartient cet objet. Ainsi, dans l'exemple choisi, un objet de la classe C1 serait implanté dans une zone contenant E1, un objet de la classe C2 serait implanté dans une zone contenant E1 et E2 un objet de la classe C3 serait implanté dans une zone contenant E1 et E3 et un objet de la classe C4 serait implanté dans une zone contenant E1, E2, E3 et E4. Dans ce contexte une variable de type C3 dans un programme peut désigner aussi bien un objet de la classe C3 que de la classe C4. Or s'il est accédé à l'état E3 à travers cette variable, il est clair qu'il n'est pas possible de définir statiquement son adresse relative dans l'objet. Une solution pourrait conduire à réserver dans les objets de la classe C3 également la zone contenant l'état E2 qui n'est pourtant pas utilisé dans C3, c'est-à-dire qu'un objet de la classe C3 serait implanté dans une zone contenant E1, E2 et E3. Cependant cette solution ne peut être valablement exploitée car une perte d'espace mémoire considérable serait engendrée. Ceci est encore plus vrai, dans un contexte d'objets persistants car une telle solution obligerait à reconstruire des objets existants lors de certains ajouts de sous-classes. La première implantation proposée est donc préférable du point de vue de l'occupation mémoire mais a pour principal inconvénient l'obligation de calculer dynamiquement l'adressage des états Ei.

Le second problème rencontré est relatif à l'appel de méthode mi. En effet, l'appel de méthode implique de déterminer dynamiquement le code à appeler. Ainsi, en prenant la méthode m1 dans l'exemple précité et en appliquant cette méthode à un objet désigné et donc manipulé à travers une variable V de type C1 (appel C++ du type "V→m1"), il apparaît que ledit objet peut appartenir indifféremment à la classe C1, C2, C3 ou C4. Suivant son type réel qui ne peut être connu qu'à l'exécution, la méthode à appliquer n'est donc pas la même. Le présent exemple peut s'illustrer comme suit :

C1 *v, *v1;
C2 *v2;
C3 *v3;
C4 *v4;
v1 = new C1 (); v2 = new C2 (); v3 = new C3 (); v4 = new C4 ();
v = v1; v→m1();/* appel de m1 définie dans C1 */
v = v1; v→m1();/* appel de m1 définie dans C1 */
v = v2; v→m1();/* appel de m1 définie dans C2 */
v= v3; v→m1();/* appel de m1 définie dans C1 */
v = v4; v→m1();/* appel de m1 définie dans C4 */

Le problème apparaît ainsi clairement grâce à cet exemple parmi les quatre appels "v→m1 ();" possibles, il existe trois cas d'exécution différents alors que le compilateur ne peut interpréter cette situation que comme un seul cas.

Dans ce contexte, le langage C++ fournit une solution satisfaisante. Ainsi pour résoudre les deux problèmes cités ci-avant, le langage C++ utilise d'une part des pointeurs dans l'implantation mémoire de l'objet pour l'accès aux états hérités et d'autre part des tables d'indirection appelés par l'homme du métier "tables virtuelles" pour la résolution de l'appel de méthode.

Comme cela a été dit précédemment, cette technique est explicitée par M.A. Ellis et B.Stroustrup dans "The Annotated C++ Reference Manual", Addison-Wesley, 1990. L'exemple proposé et décrit avec la figure 1.b permet de schématiser l'implantation mémoire, en vue de la gestion de l'héritage, d'un objet C++ de la classe C2 (Obj_C2) et celle d'un objet de la classe C4 (Obj_C4), conservant à l'esprit que, chaque classe Ci définit un état Ei et un certain nombre de méthodes dont certaines sont des surcharges (voir figure 1.a).

Pour l'implantation mémoire le compilateur associe alors à chaque classe Ci (C1, C2, C3, C4) une partie Pi (P1, P2, P3 et P4) qui est la même pour tous les objets appartenant à cette classe que ce soit par appartenance directe d'un objet de classe Ci ou par l'héritage d'un objet d'une sous-classe de Ci. Toutes les parties Pi contiennent trois sous-parties distinctes :

- une première sous-partie qui correspond à un pointeur vers une table virtuelle (VT2.1, VT2.2, VT4.1, VT4.2, VT4.3, VT4.4) contenue dans le code de la classe qui permet de gérer l'appel de n'importe quelle méthode (m1, m2,..., m7) applicable à un objet de la classe Ci (C2, C4). Ce champ est le même pour toutes les parties, il est appelé et référencé sur le dessin "vtbl". Chaque élément d'une table virtuelle contient deux champs, le premier étant un pointeur vers une fonction C implantant une méthode C++ et le second, un déplacement pour calculer le pointeur sur la partie de l'objet à passer comme premier paramètre de la fonction C, ce paramètre correspondant à la variable "this" utilisée dans le corps d'une méthode C++. Ainsi par exemple la table virtuelle VT2.1 pointée par le champ "vtbl" de la partie P1 associée à la classe C1 d'un objet de la classe C2 (obj_C2) comporte quatre éléments chacun relatif à une méthode m1, m2, m3, m4 implantée par la classe C1, chaque élément contenant deux champs. Le premier champ m1_2 du premier élément est ici un pointeur vers la fonction implantant la méthode m1 dans la classe C2 alors que le second champ d1_2 correspond au déplacement permettant de calculer le pointeur sur la partie P2 de l'objet de la classe C2. De même par exemple, la table virtuelle VT4.3 pointée par le champ "vtbl" de la partie P3 associée à la classe C3 d'un objet de la classe C4 (obj_C4), comporte cinq éléments chacun relatif soit à une méthode m2, m6 implantée par la classe C3 soit à une méthode surchargée m1, m3, m4 héritée de la classe C1. Le premier champ m1_4 du premier élément est ici un pointeur vers la fonction implantant la méthode m1 dans la classe C4 alors que le second champ d3_4 correspond au déplacement permettant de calculer le pointeur sur la partie P4 de l'objet de la classe C4.
- une seconde partie qui correspond à des pointeurs vers les parties Pj pour toutes les classes Cj dont Ci hérite directement, ces pointeurs étant appelés "Pj_addr" et référencés @ (Pj). Par exemple pour la partie P2 : "P1_addr" (@ (P1)) ou pour la partie P4 : "P2_addr" (@ (P2)) et "P3_addr" (@ (P3)).
- une troisième sous-partie qui correspond à l'état Ei défini par la classe Ci, ce champ de Pi étant nommé et référencé "st".

Pour la suite il est important de rappeler qu'une variable de type Ci, par exemple "Ci *V", pointe toujours vers une partie Pi, quelle que soit la classe réelle de l'objet pointé. Ainsi, pour définir la variable "C2 *V" (fig.1.b) V désigne Obj_C2, cette variable pointe sur le début de l'objet (début de la partie P2) alors que si V désigne Obj_C4, la variable V pointe au milieu de l'objet, début de la partie P2.

Après avoir décrit toutes les informations mises en oeuvre dans les objets C++ et à l'extérieur pour gérer la sémantique de l'héritage virtuel, il sera à présent examiné comment lesdites informations sont utilisées pour calculer l'accès aux différentes parties de l'état Ei d'un objet ou pour l'appel d'une méthode mi, il est supposé dans l'exemple suivant que les objets Obj_C2 et Obj_C4 sont désignés à travers un pointeur de type C2 contenu dans une variable V.

Pour accéder à l'état Ei d'un objet, le coût varie suivant le type du pointeur sur l'objet et la partie de l'état à accéder. Lorsqu'il s'agit de la partie correspondant au type de pointeur, l'accès ne coûte dans ce cas qu'une indirection. C'est le cas pour l'accès à l'état E2 qui se traduit par "V→st", pour l'objet Obj_C2 comme pour l'objet Obj_C4. Par contre s'il est désiré accéder à l'état E1, cela se traduit par "V→P1_addr →st", c'est-à-dire, que cet accès coûte une double indirection. En fait, il y a autant d'indirections plus une que le nombre de niveaux d'héritage séparant la partie pointée de celle de l'état à accéder, par exemple pour accéder depuis la partie P4 à l'état E1 : "P4→P2_addr→P1_addr→st" ou encore, "P4→ P3_addr→P1_addr→st".

Concernant l'appel d'une méthode mi, le coût est constant quelle que soit la classe dans laquelle la méthode appelée est implémentée. En revenant au premier exemple (Obj_C2 et Obj_C4 désignés à travers un pointeur de type C2 contenu dans une variable "V"), pour un appel en C++ "V→m2 ()", de manière évidente le code est le même que l'appel se fasse sur l'objet Obj_C2 ou sur l'objet Obj_C4. Ainsi, dans cet exemple précis, l'appel se traduit par :

"( * (V→vtbl[index(m2)].m) (V + V→vtbl[index(m2)].d,...

La première expression (entre parenthèses) permet la récupération de l'adresse du code pertinent de la méthode m2 dans la table virtuelle associée à l'objet : pour l'objet Obj_C2, table VT2.2, m2_1, ou pour l'objet Obj_C4, table virtuelle VT4.2, m2_3. L'indice dans la table est calculé statiquement, il est a priori différent pour chaque classe dans laquelle la méthode est visible. La seconde expression permet elle, le calcul du pointeur V désignant la partie sur laquelle travaille toujours la méthode appelée : pointeur vers la partie Pj ici P2, de la classe Cj ici C2 qui définit la méthode m2 appelée. Ce calcul est effectué en récupérant le déplacement par rapport au pointeur d'appel, ce déplacement étant stocké dans la table virtuelle, à l'indice correspondant à la méthode m2 appelée : pour l'objet Obj_C2, dans la table virtuelle VT2.2, d2_1, ou pour l'objet Obj_C4, dans la table virtuelle VT4.2, d2_3.

Dans le contexte d'un langage à objets compilé travaillant en mémoire centrale la technique mise en oeuvre dans cette méthode s'avère assurément efficace. Par contre, cette technique engendre de nombreux problèmes lorsqu'il est désiré l'appliquer à un langage manipulant des objets persistants et partagés par plusieurs applications en cours d'exécution.

Ainsi, dans ce nouveau contexte qui est celui pour lequel l'invention a été mise en oeuvre, deux principales difficultés sont rencontrées, une première en ce qui concerne d'abord les pointeurs vers les tables virtuelles contenues dans le code des classes, cette technique pose en effet les problèmes suivants relativement d'une part à la persistance et d'autre part au partage.

Relativement à la persistance, il est irréaliste de chercher à garantir que le code d'une classe sera toujours chargé à la même adresse, ne serait-ce que parce que le code d'une classe doit pouvoir changer. La solution à ce problème pourrait résider dans le fait de changer les pointeurs "vtbl", chaque fois qu'un objet est chargé dans une nouvelle session, lorsque l'application s'exécute, mais cette solution est coûteuse et véritablement complexe à mettre en oeuvre.

En outre, relativement au partage, il faudrait garantir que le code d'une classe est couplé et donc attaché à la même adresse dans toutes les applications l'utilisant. La solution dans ce cas consisterait à stocker de manière figée le code des classes dans une librairie partagée, mais cette technique ne peut être sérieusement exploitée car elle se prête mal à des librairies dont le code doit justement pouvoir changer régulièrement, la modification d'une librairie partagée simultanément avec l'utilisation de ladite librairie par des applications en cours d'exécution étant impossible.

Toujours dans ce nouveau contexte, une seconde difficulté est rencontrée, cette dernière principalement liée à la persistance concerne les pointeurs vers les parties Pj des super-classes. En effet, il est essentiel de pouvoir garantir que d'une session à l'autre, un objet est toujours couplé à la même adresse virtuelle. La technique décrite ci-avant ne peut être mise en oeuvre qu'à l'aide d'un fichier UNIX (marque déposée de UNIX System Laboratories, Inc) dit (par l'homme du métier) "mappé", c'est-à-dire pour lequel des correspondances sont imposées, ceci dans l'hypothèse fort peu probable où il serait possible de garantir que ledit fichier est toujours couplé à la même adresse virtuelle. Une autre technique pourrait, sinon, consister à rafraîchir ces pointeurs lors du chargement de l'objet, mais cette seconde solution est encore une fois fort coûteuse et complexe à mettre en oeuvre.

Conformément à l'idée de la présente invention, dans ce contexte où un système ou un langage à objets persistants et partagés est utilisé, le procédé de gestion de l'héritage multiple est remarquable en ce que le format d'un objet est maintenu inchangé lors du chargement dudit objet de l'espace persistant vers l'espace virtuel, chaque classe engendrant un objet étant associée à un identificateur de la classe constant dans toutes les applications utilisant la classe ainsi qu'à travers toutes les recompilations, la structure de l'objet étant ainsi indépendante de l'adresse d'implantation en mémoire et du code de la classe générant cet objet, alors qu'un chemin d'adressage permettant la gestion de l'héritage est emprunté au travers de différentes tables.

Ainsi, selon cette solution revendiquée, il est proposé un format pour des objets C++ persistants accompagné d'une technique de gestion de l'héritage permettant d'offrir toutes les réponses aux problèmes propres au dernier contexte décrits précédemment. Son champ d'application couvre l'ensemble des langages persistants à objets ainsi que les systèmes de gestion de base de données à objets offrant une fonction d'héritage multiple similaire à celle du langage C++ (héritage virtuel et méthodes virtuelles).

Il ne sera pas donné ici d'algorithme permettant de produire les structures de données nécessaires au mécanisme, ni même d'algorithme de traduction d'un code source vers du code objet utilisant ces structures. Ces algorithmes sont en effet spécifiques de chacun des langages utilisant cette technique même s'ils ont des caractéristiques communes que l'homme du métier peut extraire de manière triviale en se référant à l'exemple de traduction donné dans la suite, juste après la description de la figure 2.

Un avantage immédiat du format d'objet proposé est que ce format est conservé identique dans l'espace persistant et dans l'espace virtuel, aucune transformation de format n'est ainsi nécessitée lors du chargement d'un objet de l'espace persistant par exemple le disque vers l'espace virtuel par exemple la mémoire centrale.

Selon l'invention, l'hypothèse minimale suivante est faite, à chaque classe engendrant des objets persistants est associé un identificateur de la classe constant dans toutes les applications utilisant la classe, ainsi qu'à travers toutes les recompilations. Cette hypothèse minimale est indispensable pour mettre en oeuvre l'invention dans ce contexte d'objets persistants et partagés. De manière préférée, l'identificateur de la classe est un entier. Ainsi dans la suite, lorsqu'il est parlé d'une classe Ci, i est l'identificateur de la classe.

De même, de manière remarquable, pour l'implantation des objets en mémoire, chaque classe est associée à une partie qui est identique pour tous les objets appartenant à cette classe, chaque partie étant composée de deux sous-parties, une première sous-partie comportant un identificateur de la classe réelle qui a engendré l'objet, identificateur utilisé comme indice dans une table de classes donnant le point d'entrée du chemin permettant la gestion de l'héritage et une seconde sous-partie renfermant l'état défini par la classe ayant engendré l'objet, l'ensemble des attributs définis par ladite classe étant regroupé dans ledit état.

De cette manière, pour implanter des objets en mémoire, le compilateur va associer à chaque classe une partie Pi qui est la même pour tous les objets appartenant à cette classe. Sur la figure 2.b, la partie P1 par exemple est la même, qu'il s'agisse d'un objet de la classe C2 (Obj_C2) ou d'un objet de la classe C4 (Obj_C4). Sur la figure 2.b, chaque partie Pi apparaît composée de deux sous-parties au lieu de trois (voir fig. 1.b) comme dans l'exemple décrivant l'art antérieur.

La première sous-partie correspond à l'identificateur de la classe réelle de l'objet, c'est-à-dire la classe qui a engendré l'objet. Cet identificateur va être utilisé comme un indice dans une table de classes, appelée et référencée sur le dessin Tabclass, qui donne le point d'entrée d'un chemin permettant de gérer l'héritage. Pour un objet donné, composé de plusieurs parties Pi, cet identificateur est donc dupliqué dans chaque partie Pi. Ainsi pour l'objet Obj_C2 l'identificateur est le même pour les parties P1 et P2 ou pour l'objet Obj_C4 l'identificateur est le même pour les parties P1, P2, P3 et P4. Ce choix est nécessaire puisqu'il est désiré pouvoir référencer l'objet par l'une quelconque de ses parties, suivant le type de la variable référençant ledit objet, une variable de type Ci pointant toujours sur une partie Pi. Ce champ de Pi est nommé "cid".

La seconde sous-partie correspond à l'état Ei défini par la classe Ci. Ce champ est nommé "st", comme sur la figure 1.b.

Dès à présent, il est possible de noter qu'il est bénéficié d'un gain d'espace mémoire dans un objet puisque seule est nécessitée une information équivalente au pointeur sur la table virtuelle, les informations relatives aux pointeurs vers les parties des super-classes directes d'une classe ne sont plus requises. n peut être montré, maintenant, à travers le même exemple proposé avec la solution de l'art antérieur, comment gérer l'héritage multiple à partir de tables d'indirection ou tables virtuelles, de manière originale par rapport au procédé de gestion mis en oeuvre dans l'art antérieur avec C++.

Comme dans l'exemple précédent, il est supposé une variable V de type Ci qui désigne un objet Obj_Cj de type Cj, Cj étant soit la classe Ci elle-même, soit une sous-classe de Ci. Le type Ci de la variable détermine un ensemble de méthodes applicables à l'objet qui en fait, est un sous-ensemble de l'ensemble des méthodes qui peuvent être appliquées à l'objet Obj_Cj, ce dernier ensemble étant défini par le type réel Cj de l'objet. De manière remarquable, chaque super-classe Cj définit un masque d'accès à la fois aux méthodes applicables à un objet de type réel Cj ainsi qu'aux parties correspondant à ces super-classes. C'est ce qui est montré sur la figure 2.b où la table appelée Tabclass fournit pour chaque classe Cj un pointeur vers une table de masques appelée Tabmask_Cj, sur la figure Tabmask_C2 et Tabmask_C4, contenant les différents masques à travers lesquels un objet de type Cj, Obj_C2 ou Obj_C4, peut être manipulé. En fait, un masque permet de décrire les différents types de variables au travers desquelles l'objet d'une classe donnée peut être manipulée.

Selon l'invention une table de masques comporte autant de masques que de classes héritées plus une, la classe ayant engendré l'objet, chaque masque (chaque ligne du tableau) comporte trois champs. Le premier champ appelé "fdeb" correspond au déplacement dd_i (dd_1 à dd_2 pour Tabmask_C2 et dd_1 à dd_4 pour Tabmask_C4) qui permet à partir d'un pointeur sur le début de l'objet de calculer un pointeur sur la partie Pi et inversement. Le second champ appelé "tabdep" correspond à un pointeur vers une table de déplacement, ainsi pour Tabmask_C2, vers la table de déplacement ST2.2 (déplacement d2_1) ou pour Tabmask_C4, vers les tables de déplacement ST4.2 (déplacement d2_1), ST4.3 (déplacement d3_1) et ST4.4 (déplacements d4_1, d4_2 et d4_3). En fait, chaque table contient le ou les déplacements possibles permettant de manipuler un objet à partir d'une variable d'une classe, de cette classe vers la ou les classes dont elle a hérité. Enfin, un troisième champ appelé "vtbl" correspond à un pointeur vers une table virtuelle (pour Tabmask_C2, les tables virtuelles VT2.1, VT2.2 et pour Tabmask_C4; les tables virtuelles VT4.1, VT4.2, VT4.3 et VT4.4) dont la structure est la même que pour la technique employée avec C++ et décrite avec la figure 1.b.

Le déplacement correspondant au champ "fdeb" peut être utile lors d'un chargement ou d'un déchargement explicite d'un objet de ou vers une mémoire secondaire. En effet, lors du chargement, c'est l'adresse sur le début de l'objet qui est généralement rendue. De même, pour le déchargement, il est souvent nécessaire d'avoir le pointeur sur le début de l'objet.

Pour généraliser et étudier la mise en oeuvre de l'héritage à travers les structures décrites avec la figure 2.b, il est fait l'hypothèse d'une manipulation d'un objet à partir d'une variable V, définie par "Ci" *V" désignant un objet de type réel Cj.

Ainsi, pour le chargement d'un objet, en supposant une instruction explicite de chargement s'exprimant par "V=charge_objet(adresse_disque);" où "charge_objet" consiste à charger en mémoire centrale un objet depuis le disque, à partir de son adresse disque et retourner donc son adresse virtuelle, il est nécessaire de transformer cette affectation dans l'expression en langage C suivante:

$$(V = charge\_objet(adresse\_disque), V = V + Tabclass [V \rightarrow cid][i].fdeb);$$

De même, pour le déchargement d'un objet, en supposant une instruction explicite de déchargement s'exprimant par "décharge_objet(V, adresse_disque, taille);" qui décharge l'objet pointé par la variable V en mémoire centrale sur le disque à l'adresse "adresse_disque", ou "taille" signifie taille de l'objet, il faut transformer cette instruction de la manière suivante :

décharge_objet (V - Tabclass [V→cid][i].fdeb), adresse_disque, taille);

Il est à noter que la taille de l'objet peut être aisément stockée si nécessaire dans une table supplémentaire appelée par exemple "Tailleclass", l'accès à la taille se faisant alors par "Tailleclass[V→cid]".

A présent, concernant l'accès à l'état Ei d'un objet, deux cas de figure peuvent se présenter. Un premier cas, lorsque c'est l'état Ei qui est accédé, sachant que la variable pointe toujours sur la partie Pi, l'accès se fait alors simplement par "V→st". Dans ce cas, le coût est donc le même que pour la technique C++ décrite précédemment. Le second cas se présente lorsque c'est l'état Ej qui est accédé, la classe Cj étant une super-classe directe ou indirecte de Ci, l'accès se fait alors par "(V+Tabclass[V→cid][i].tabdep[index (j)])→st".

Dans cette instruction, "index (j)" est un indice dans la table des super-classes de Ci qui est déterminé statiquement par le générateur de code, cet indice est le même pour tous les masques associés à une classe donnée. L'entrée de la table de déplacement (ST2.2, ST4.2, ST4.3 ou ST4.4) fournit le déplacement permettant de calculer l'adresse de la partie Pj à partir de l'adresse de la partie Pi. Il est à noter que par rapport au premier cas, le coût est d'environ trois indirections et trois opérations arithmétiques: deux sommes et une multiplication. Le coût donc ici est supérieur à celui de la technique C++, de deux indirections et trois opérations.

Par contre, ce coût est constant quel que soit la hiérarchie d'héritage alors qu'il est nécessaire d'ajouter une indirection en plus pour chaque niveau traversé avec la technique C++.

Concernant l'appel de méthode mi, ce dernier se fait toujours de la même manière, le coût est constant comme avec la technique C++. L'appel de la méthode mi se fait donc par :

"( * (Tabclass [V→cid] [i].vtbl[index (mi)].m)) (V + Tabclass [V→cid] [i].vtbl[index (mi)].d..."

De manière remarquable, la première expression (entre parenthèses) permet le calcul de la fonction à appeler qui correspond à la méthode mi, "index (mi)" étant défini statiquement par le générateur de code qui associe à chaque classe, la table virtuelle contenant les méthodes qui lui sont applicables. La seconde expression elle, permet le calcul de l'adresse de la partie Pi à passer comme premier paramètre de la fonction en utilisant le déplacement défini dans la table virtuelle à l'indice "index (mi)", une sortie de ladite table virtuelle contenant effectivement d'une part un pointeur vers la fonction implantant la méthode correspondante et d'autre part ledit déplacement. . Cette table virtuelle a la même structure pour tous les masques utilisés dans les sous-classes.

Par contre, la fonction associée à une entrée, ainsi que le déplacement peuvent être différents d'un masque à l'autre puisque les méthodes peuvent être redéfinies dans les sous-classes. Par exemple, la fonction m6_4 implantant la méthode m6 peut être associée soit au déplacement d3_4 (table virtuelle VT4.3) soit au déplacement d4_4 (table virtuelle VT4.4).

Suit à présent un exemple de traduction qui permettra d'encore mieux appréhender la solution proposée. Cet exemple est défini dans le langage C++, qui met en oeuvre trois classes introduisant des liens d'héritage multiple.

```
class Personne {
public :
    char Nom[40];
    char Prénom[30];
    long DateNaissance;
    virtual short Age ();
};


class Imposable     {
protected :
    double RevenuImposable;
public :
    virtual void AffectRevenuImp ();
    virtual double CalculImpot ();


};

class Salarie : public virtual Personne, public virtual Imposable {

public:
    double SalaireBrutMensuel;
    virtual void AffectRevenuImp () ;
    virtual double CalculImpot () ;
};
```

La traduction en langage C de cet exemple, mettant en oeuvre les mécanismes proposés précédemment est la suivante :

. Informations générales liées à l'exemple

```
typedef int (* T_meth) (char *obj);
typedef struct {
    T_meth m;
    long d;
    } s_vtbl;
typedef struct {
    long cid;
    long st;
    } s_Part;
typedef struct {
    long fdeb;
    long *tabdep;
    s_vtbl  *vtbl;
    }   s_tabmask;


s_tabmask *TabClass[] =
        {
        Tabmask_Personne,
        Tabmask_Imposable,
        Tabmask_Salarie
        };


long TailleCLass [] =


            {
            sizeof(Personne),
            sizeof(Imposable),
            sizeof(Salarie)
            };
```

. Informations relatives à la classe **Personne**

```
#define CID_PERSONNE (long) 0)

typedef struct {
    long cid;
    struct {
        char Nom[40];
        char Prenom[30];
        long DateNaissance;
        } st;
    } s_PPersonne

typedef struct {
    s_PPersonne PPersonne;
    } Personne;

s_tabmask Tabmask_Personne [] =
    {
    {0, NULL, vtbl_Personne_Personne}

    };

#define INDEX_PERSONNE_AGE 0
s_vtbl vtbl_Personne_Personne[] =
    {
    { (T_meth)Personne_Age, 0}
    }.
```

. Informations relatives à la classe **Imposable**

```
#define CID_IMPOSABLE ((long) 1)
```

```
typedef struct {
    long cid;
    struct  {
        double RevenuImposable;
        } st;
    } s_PImposable;


typedef struct {
    s_PImposable PImposable;
    } Imposable;


s_tabmask Tabmask_Imposable [] =
    {
    {0, NULL, NULL},
    {0,  NULL, vtbl_Imposable_Imposable}
    };


#define INDEX_IMPOSABLE_AFFECTREVENUIMP 0
#define INDEX_IMPOSABLE_CALCULIMPOT 1
s_vtbl vtbl_Imposable_Imposable [] =
    {
    {(T_meth) Imposable_AffectRevenuImp,     0},
    {(T_meth) Imposable_CalculImpot,     0}
    };
```

. Informations relatives à la classe **Salarie**

```
#define CID_SALARIE ((long) 2)


typedef struct {
    long cid;
    struct {
        double SalaireBrutMensuel;
        } st;
    } s_PSalarie;


typedef struct {
```

11

```
        s_PSalarie PSalarie;
        s_PPersonne PPersonne;
        s_PImposable PImposable;
        } Salarie;
        s_tabmask Tabmask_Salarie[] =
            {
            {sizeof(s_PSalarie),  NULL, vtbl Salarie Personne},
                {sizeof(s_PSalarie)  +  sizeof(s_PPersonne),    NULL,
        vtbl_Salarie_Imposable},
            {0,     tabdep_Salarie_Salarie,     vtbl_Salarie_Salarie}
            };


        #define   INDEX_SALARIE_AGE  ((long)  0)
        #define   INDEX_SALARIE_AFFECTREVENUIMP ((long)  1)
        #define   INDEX_SALARIE_CALCULIMPOT ((long)  2)
        s_vtbl  vtbl_Salarie_Personne[]  =
            {
            { (T_meth)Personne_Age,   0)
            };
          s_vtbl    vtbl_Salarie_Imposable [] =
            {
            {(T_meth)Salarie_AffectRevenuImp,        -sizeof (s_PPersonne)        -
        sizeof (s_PSalarie) },
            {T_meth)Salarie_CalculImpot,                 -sizeof(s_PPersonne)        -
        sizeof (s_PSalarie)}
            };
          s_vtbl  vtbl_Salarie_Salarie [] =
            {
            { (T_meth) Personne_Age,   sizeof (s_PSalarie) }
            { (T_meth) Salarie_AffectRevenuImp,    0},
            { (T_meth) Salarie_CalculImpot,      0}
            };
```

Il est à remarquer que chaque fonction est préfixée par le nom de la classe qui la definit. En effet, comme les méthodes sont traduites sous forme de fonctions C et qu'une méthode peut être surchargée dans une sous-classe, il est nécessaire de préfixer les noms des fonctions pour distinguer deux mises en oeuvre différentes d'une même méthode.

A partir de la traduction ci-dessus, il est possible de montrer un exemple d'utilisation de structures ainsi définies. Il est supposé que le morceau de code suivant est à traduire :

```
Personne   *p;
Salarie    *s;
short  a;
...
p = s
a = s→Age()  +   p→Age();
strcpy  (s→Nom,   "toto");
s→SalaireBrutMensuel  =   10000;
```

La traduction est alors la suivante :

```
char   *p;
char   *s;
short   a;
....
p  =   (s + Tabclass[((s_Part *)s)→cid]  [CID_SALARIE]   .
tabdep   [CID_PERSONNE]);
a  =   ((Tabclass[((s_Part  *)s)→cid] [CID_SALARIE]   . vtbl
[INDEX_SALARIE_AGE].m(s   +   Tabclass [s_Part   *)s)→cid]
[CID_SALARIE]  . vtbl   [INDEX_SALARIE_AGE].d))        +
Tabclass[((s_Part *)s)→cid]   [CID_PERSONNE]   .   vtbl
[INDEX_PERSONNE_AGE].m(s  +  Tabclass [(s_Part  *)s)→cid]
CID_PERSONNE]  . vtbl   [INDEX_PERSONNE_AGE].d)));
strcpy   (((s_PPersonne   *)   (s   +   Tabclass [((s_Part

*)s)→cid]  [CID_SALARIE]   . tabdep   [CID_PERSONNE]))  →
st.Nom,  "toto");
((s_PSalarie  *)  s)   →  st.SalaireBrutMensuel  =   10000;
```

La solution proposée selon la présente invention résout donc tous les problèmes liés à la gestion de l'héritage multiple dans un contexte d'objets persistants et partagés, tel que par exemple un couplage des objets dans un segment de mémoire partagée UNIX. Elle s'applique avantageusement au langage C++ lorsque ce dernier est rendu persistant mais elle peut également s'appliquer à tout autre langage ou système à objets persistants qui supportent les mêmes concepts d'héritage. Cette solution est aisée et efficace à mettre en oeuvre, la plus grande partie du traitement étant effectuée statiquement au moment de la compilation. Le chemin d'adressage imposé peut être appliqué de nouveau sans opération préalable sur l'objet en train d'être chargé. Conformément à l'idée de l'invention, la structure de l'objet est d'une part indépendante du code de la classe et donc de l'adresse à laquelle il va être implanté et d'autre part indépendante du code de la classe qui a engendré cet objet.

**EP 0 672 983 A1**

## Revendications

1. Procédé de gestion de l'héritage multiple dans un système ou un langage à objets persistants et partagés caractérisé en ce que le format d'un objet est maintenu inchangé lors du chargement dudit objet de l'espace persistant vers l'espace virtuel, chaque classe engendrant un objet étant associée à un identificateur de la classe constant dans toutes les applications utilisant la classe ainsi qu'à travers toutes les recompilations, la structure de l'objet étant ainsi indépendante de l'adresse d'implantation en mémoire et du code de la classe générant cet objet, alors qu'un chemin d'adressage permettant la gestion de l'héritage est emprunté au travers de différentes tables.

2. Procédé de gestion de l'héritage multiple selon la revendication 1, caractérisé en ce que pour l'implantation des objets en mémoire, chaque classe est associée à une partie qui est identique pour tous les objets appartenant à cette classe, chaque partie étant composée de deux sous-parties, une première sous-partie comportant un identificateur de la classe réelle qui a engendré l'objet, identificateur utilisé comme indice dans une table de classes donnant le point d'entrée du chemin permettant la gestion de l'héritage et une seconde sous-partie renfermant l'état défini par la classe ayant engendré l'objet, l'ensemble des attributs définis par ladite classe étant regroupé dans ledit état.

3. Procédé de gestion de l'héritage multiple selon la revendication 2, caractérisé en ce que l'identificateur de classe associé à chaque classe est un entier.

4. Procédé de gestion de l'héritage multiple selon la revendication 2 ou 3, caractérisé en ce que la table de classes fournit pour chaque classe un pointeur vers une table de masques contenant les différents masques à travers lesquels un objet peut être manipulé, chaque masque étant défini par une classe héritée et autorisant l'accès à la fois aux méthodes permettant de manipuler l'objet ainsi qu'à la partie associée à ladite classe héritée.

5. Procédé de gestion de l'héritage multiple selon la revendication 4, caractérisé en ce que, une table de masques comporte autant de masques que de classes héritées plus une, la classe ayant engendré l'objet, chaque masque comportant trois champs, un premier champ correspondant au déplacement permettant à partir d'un pointeur sur le début de l'objet de calculer un pointeur sur la partie associée à la classe ayant engendré l'objet et inversement un second champ correspondant à un pointeur vers une table de déplacement qui donne le déplacement permettant de calculer l'adresse de la partie associée à l'objet concerné pour accéder à l'état dudit objet et un troisième champ correspondant à un pointeur vers une table virtuelle qui permet de déterminer la méthode à appeler.

6. Procédé de gestion de l'héritage multiple selon la revendication 5, caractérisé en ce que, lors de l'appel d'une méthode, il est calculé une fonction à appeler qui correspond à la méthode concernée, un index étant pour cela défini statiquement par le générateur de code qui associe à chaque classe la table virtuelle contenant les méthodes qui lui sont applicables, alors qu'une entrée de ladite table contient un pointeur vers la fonction implantant la méthode correspondante et un déplacement permettant de calculer l'adresse de la partie de l'objet à passer comme premier paramètre de ladite méthode.

14

FIG.1a

FIG.1b

C1(E1,m1,m2,m3,m4)

C2(E2,m1,m5)     C3(E3,m2,m6)

C4(E4,m1,m3,m6,m7)

FIG.2a

FIG.2b

Office européen
des brevets

**RAPPORT DE RECHERCHE EUROPEENNE**

Numero de la demande
EP 95 40 0439

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int.Cl.6) |
| X | US-A-4 853 842 (THATTE ET AL) 1 Août 1989 <br> * colonne 4, ligne 35 - ligne 48 * <br> * colonne 5, ligne 52 - colonne 6, ligne 23 * <br> * colonne 7, ligne 26 - ligne 57 * <br> * figure 3 * <br> ----- | 1 | G06F9/44 |
| | | | **DOMAINES TECHNIQUES RECHERCHES (Int.Cl.6)** |
| | | | G06F |

Le présent rapport a été établi pour toutes les revendications

| Lieu de la recherche | Date d'achèvement de la recherche | Examinateur |
|---|---|---|
| LA HAYE | 3 Avril 1995 | Brandt, J |